# EUROPEAN PATENT APPLICATION

(11) **EP 3 974 123 A1**
(43) Date of publication of application: **30.03.2022**
(21) Application number: 20198947.2
(22) Date of filing: 29.09.2020
(51) Int. Cl.: B25J 9/16, B23Q 15/16, B25J 11/00, G05B 19/404

(54) **METHOD AND SYSTEM FOR AUTOMATIC COMPENSATION OF TOOL WEAR**

(71) Applicant: Flexmill Oy, 01900 Nurmijärvi (FI)
(72) Inventor: Mäkelä, Janne, 01900 Nurmijärvi (FI); Eklund, Jan, 01900 Nurmijärvi (FI); Nousiainen, Lauri, 01900 Nurmijärvi (FI)
(74) Representative: Kolster Oy Ab

(57) **Abstract**

There is provided a method and a system for compensating a tool wear in a robotic grinding process, the method comprising following steps: obtaining, by a processing circuitry, a first process parameter set of the grinding process; determining, by the processing circuitry, a second process parameter set of the grinding process based at least partly on the first process parameter set; generating, by the processing circuitry, at least one compensation factor for at least one parameter of the second process parameter set based, at least partly, on tool wear data; and compensating, by a tooling unit, wearing of a grinding tool based on the compensation factor.

## Description

### FIELD OF THE INVENTION

The invention relates to a system and method for compensating a tool wear automatically in a robotic grinding process.

### BACKGROUND OF THE INVENTION

Wearing of tools causes many challenges in grinding processes. For example, to maintain constant quality in the process is challenging because of the tool wear and therefore, the tool wear should be compensated. Known solutions for compensating the tool wear in the robotic grinding process have many disadvantages. To alleviate the disadvantages, more sophisticated solution for automatic compensation of the tool wear in the robotic grinding process is needed.

### BRIEF DESCRIPTION OF THE INVENTION

The present invention is defined by the subject matters of the independent claims.

Embodiments are defined in the dependent claims.

The embodiments and features, if any, described in this specification that do not fall under the scope of the independent claim(s) are to be interpreted as examples useful for understanding various embodiments of the invention.

### BRIEF DESCRIPTION OF THE DRAWINGS

Example embodiments of the present invention are described below, by way of example only, with reference to the accompanying drawings, in which
Figures 1, 2 and 4 illustrate a method for compensating a tool wear in the grinding process according to embodiments;
Figures 3A and 3B illustrate data used in the compensation of the tool wear according to an embodiment: and
Figure 5 illustrates a system for compensating the tool wear in the grinding process according to embodiment.

### DETAILED DESCRIPTION OF THE INVENTION

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

A grinding tool wears remarkably in use and this affects heavily a quality of the grinding process. To maintain the constant quality, the tool wear shall be compensated. The current compensation solutions used in automatic robotic gridding processes have many drawbacks. For example, sensors are traditionally used in the tool wear compensation that may make the process complex. Hence, more sophisticated solution for the automatic compensation of the tool wear in the robotic grinding process is clearly needed.

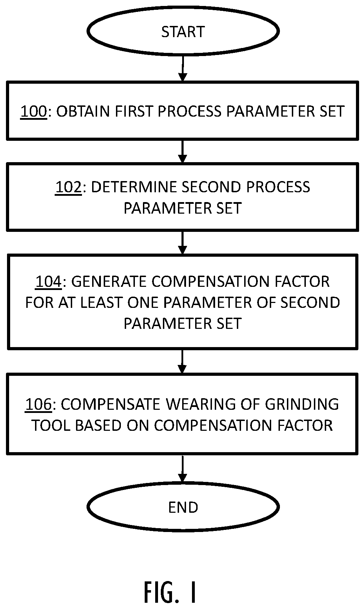

To alleviate the drawbacks in the known solutions, there is provided a method and system for compensating the tool wear in the robotic grinding process. Referring to Figure 1, the method comprising: obtaining (block 100), by a processing circuitry, a first process parameter set of the grinding process; determining (block 102), by the processing circuitry, a second process parameter set of the grinding process based at least partly on the first process parameter set; generating (block 104), by the processing circuitry, at least one compensation factor for at least one parameter of the second process parameter set based at least partly on the first and/or the second process parameter sets; and compensating (block 106), by the tooling unit, a tool wear in the grinding process based on the compensation factor.

The term "grinding" may refer to a finishing process of a part after manufacturing (tooling). One example of the grinding process may be deburring of a metal part. Although the invention is presented from the grinding point of view, the invention may also be applied in other finishing processes in which the tool wear is the issue. So the term "grinding" should be interpreted in a broad sense that may refer to a plurality of finishing processes.

The term "robotic grinding process" may refer to the automatic grinding process in which the industrial robot(s) is/are used in the process. A type of the robot(s) used in the grinding process may vary according to the needs.

Still referring to Figure 1, in block 100 the processing circuitry obtains the first set of the process parameters. The first process parameter set may comprise at least a part of the parameters needed for determining a setup for the desired grinding process. In other words, it may comprise at least a part of the parameters needed to perform the desired grinding process. The first parameter set may comprise generic parameters of the grinding process like, for example, a type of the grinding process and grinding tool. The first parameter set may be different for the different kind of grinding processes.

In an embodiment, the processing circuitry obtains the first process parameter set as a manual input. For example, an operator of the robotic grinding process may provide the first process parameter set for the processing circuitry as the manual input. The operator may feed the parameters, for example, via user interface into the system of the grinding process. The parameters of the first parameter set may be available as a menu in the user interface wherein the operator can make the selection. The menu may show all parameter options of the first parameter set and it may be, for example, a pull-down menu.

In an embodiment, the processing circuitry obtains the first process parameter set automatically. Then the parameters of the first parameter set may not be fed into the processing circuitry one by one. For example, the first parameter sets may be available as predetermined options (like set 1, set 2, set 3 ... set n) and the operator may select the option according to the needs. When the selection is done (for example set 1), the processing circuitry obtains automatically the parameters according to the selected set. The predetermined options of the first parameter sets may be customized for the different kind of grinding purposes according of the part to be ground and desired result, for example.

In an embodiment, the processing circuitry generates the first parameter set from coded input data. The coded data may be, for example, a file which is uploaded via user interface into the robotic grinding process and the processing circuitry may be capable of generate the first parameter set from the uploaded file. Referring to previous embodiment, the first parameter sets may also be available as predetermined options (like set 1, set 2, set 3 ... set n) and the coded input data may comprise information which set shall be selected for the part. Then the processing circuitry obtains the parameters of the selected first parameter set, for example, from the database.

In an embodiment, the coded input data comprise a barcode and/or QR-code. By reading the barcode and/or QR-code, the data included in the code is input into the system. The processing circuitry may be capable of determine what kind of grinding process is needed and/or generate the first parameter set from the code. The robotic grinding system may comprise, for example, a reader configured to read the code. The code may be in a technical drawing and/or in the part to be ground, for example.

In an embodiment, the coded input data comprise a computer aided design file, a CAD-file. The CAD-file may be uploaded into the system via user interface, for example.

Still referring to Figure 1, in block 102 the processing circuitry determines the second process parameter set of the grinding process based at least partly on the first process parameter set. As described, the first parameter set may comprise more generic parameters of the grinding process like, for example, the type of the grinding etc. The second parameter set may comprise more specific parameters of the grinding process like, for example, how the grinding tool is used in the grinding process to get desired result (actual grinding parameters). The second parameter set may be determined when the first parameter set is known. In other words, when the more generic parameters (first parameter set) are known, the processing circuitry is capable of determine the more specific parameters (second parameter set). All parameters of the first parameter set may not necessarily be used when determining the second parameter set, only a part of them.

In an embodiment, the grinding process is performed based on the combination of the first and second parameter sets. In other words, the combination of the first and the second parameter sets comprise all parameters needed to perform the grinding of the part. As described, the first parameter set comprises the more generic parameters that are used for determining the second process parameter set that comprises the more specific grinding parameters. It is also good to realise that although the invention is described such that there are two separate parameter sets, still there may be only one parameter set that is obtained/determined in two steps (sets).

In an embodiment, the first and/or second process parameter set comprises at least one process parameter. For example, the first parameter set may comprise only one parameter that is fed into the system and other parameters (second parameter set) may be determined by the processing circuitry based on that one parameter. Hence, although the term 'set' refers to a plurality of the parameters, it may also refer to only one parameter.

Still referring to Figure 1, in block 104, the processing circuitry generates at least one compensation factor for at least one parameter of the second process parameter set based, at least partly, on the tool wear data. In an embodiment, the tool wear data is based on the actual wearing of the tool. The tool wear data that is got from actual testing how the some certain grinding tool wears over the time in the different kind of use. For example, the grinding tool may be used (worn) for some certain time and the grinding result is evaluated, then the tool is used again for some certain time and results are evaluated again. By repeating this procedure until the grinding tool is worn out, the tool wear data of the grinding tool is received. This procedure may be repeated a plurality of times with different kind of grinding tools, grinding types, materials of the part to be ground, strengths of the grinding, etc. The test procedure may be repeated so many times that the tool wear data is reliable from a statistical point of view. The tool wear data may be presented in a form of curve.

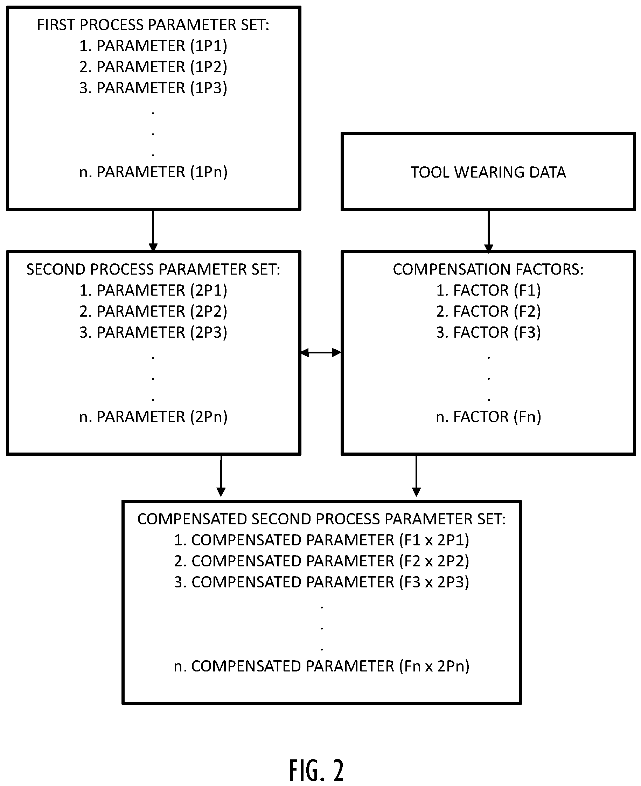

Referring to Figure 2, at first the first parameter set (1P1, 1P2, 1P3, ... 1Pn) is obtained by the processing circuitry and based on the first parameter set the second parameter set (2P1, 2P2, 2P3, ... 2Pn) is determined. The processing circuitry is further configured to generate the compensation factors (F1, F2, F3, ... Fn) for the parameters of the second parameter set based, at least partly, on the tool wear data. Then the parameters of the second parameter set are compensated by the compensation factors (F1^{∗}2P1, F2^{∗}2P2, F3^{∗}2P3, ... Fn^{∗}2Pn) and these parameters are used for actual grinding of the part in the robotic grinding process.

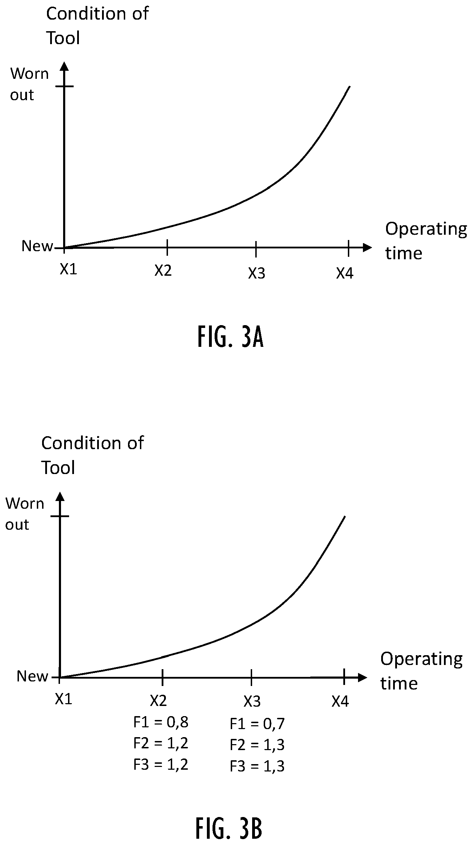

Figure 3A illustrates an example of a tool wear data in the form of the curve according to an embodiment. A condition of tool is presented in a vertical axis (new => worn out) and an operating time of the tool is presented in a horizontal axis (X1 => X4). At a point X1 of the operating time, the grinding tool is brand new and at a point X4 it is worn out. When the operating time of the tool is known, the condition of tool can be estimated based on the curve. The estimation may be used for generating the compensation factor for the tool wear.

As described, the second parameter set may comprise parameters defining how the grinding tool is used in the grinding process to get the desired result. These are the parameters that shall be compensated (or part of them) when the tool wears to get desired constant result from the grinding process. The processing circuitry is configured to generate the compensation factor(s) for these parameters for compensating the tool wear in the process. Hence, nevertheless the tool wears in the process, the compensation factor compensate the tool wear such that the constant quality is achieved.

For example, the type of the grinding process and grinding tool may be determined in the first parameter set and the parameters how to use the tool in the grinding process (grinding parameters) to get desired result may be determined in the second parameter set. When the second parameters are determined, the compensation factors for one or more parameters of the second parameter set (grinding parameters) may be generated. Hence, the first parameter set is used to determine the second parameter set, and the tool wear data is used, at least partly, to generate the compensation factor(s) for the second parameter set. In an embodiment, the processing circuitry is configured to generate the compensation factor also for one or more parameters of the first parameter set.

Still referring to Figure 1, in block 106 the tooling unit compensates the tool wear in the grinding process based on the compensation factor. Compensation of the tool wear according to the compensation factor(s) enables to achieve the constant quality of the grinding process nevertheless the tool wears over the time. The compensation may be automatic process such that robotic grinding process automatically compensate the tool wear during the process. Then there are no needs, for example, for checking the tool condition during the process or making any compensations manually.

The invention provide very effective but simple solution for automatically providing the compensation factors for the process parameters of the grinding process and automatically compensating the tool wear. Because of the automatic compensation, the invention is suitable for a highly automated grinding process because manual work to compensate the tool wear is not needed during the grinding process.

In an embodiment, the processing circuitry is further configured to adjust the at least one compensation factor during the grinding process based on the tool wear data. The compensation factor generated at the beginning of the grinding process may not be enough for the effective tool compensation and hence, the compensation factor shall be adjusted during the process. Referring to Figure 3B, the compensation factors may not be needed at the point X of the operating time because the grinding tool is brand new. At a point X2 the compensation parameters may be generated because the constant quality may not be achieved with the determined second parameters set anymore. At a point X3 of the operating time, the compensation factors are adjusted because the grinding tool is further worn from the point X2 and the constant quality may not be achieved with the compensation factors generated at that point.

In an embodiment, the tooling unit is configured to compensate the grinding process based on the adjusted compensate factors. In other words, the parameters of second parameter set may be adjusted according to the adjusted compensation factors.

In an embodiment, the processing circuitry generates the compensation factor for each parameter of the second parameter set. In another embodiment, the processing circuitry generates the compensation factors for at least one parameter of the second parameters set. For example, the second process parameter set may only comprise parameters that are needed in the compensation of the tool wear, and then compensation factor is generated for all of the parameters of the second parameter set. The second parameter set may also comprise parameters that are not needed in the compensations of the tool wear, and then the compensation factor may not be generated for these parameters.

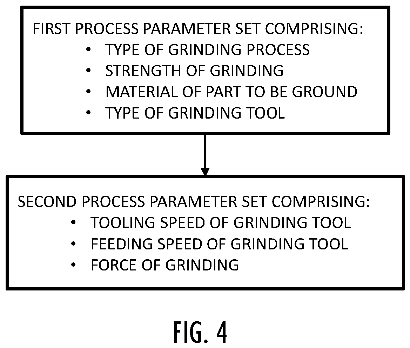

Referring to Figure 4, in an embodiment, the first process parameter set comprises at least one of following: a type of the grinding process, strength of the grinding, a material of part to be ground and/or a type of the grinding tool. The type of grinding process may comprise, for example, grinding of welding seams, deburring of edges or grinding of flat surfaces etc. The type of the grinding process affects the other parameters and hence, it may be defined at an early phase. The strength of the grinding refers how heavily the part is ground, in other words, how much material will be removed from the part. The strength of the grinding may also refer to a surface roughness. It may also be called as an aggressiveness of the grinding. There may be, for example, several different strength levels available like very light, light, medium, heavy and very heavy. More material may be removed from the part in the light treatment compared to the heavy treatment, for example. The material of the part to be ground may comprise, for example, steel, aluminium, copper or brass etc. In some case, it may also be other material than metal like plastic, composite or wood, for example. The grinding tool is selected, for example, according to the desired grinding results, the part to be ground and/ or the type of the grinding process. Manufacturers of the grinding tools have a wide selection of the different grinding tool types having differences in materials, hardness, roughness, gluing material, durability, etc.

In an embodiment, all of the mentioned parameters of the first parameter set are available as the menu in the user interface. Then, for example, operator of the grinding process can make the selection of the first parameters from the menu. For example, the type of the grinding processes may be named and presented according to the purpose of the grinding process. Following selection may be available: grinding of welding seam, deburring of edge and grinding of flat surface to mention a few examples. Another example, the selection of the strength of the grinding may be done from following options: very light, light, medium, heavy or very heavy.

Still referring to Figure 4, in an embodiment, the second process parameter set comprises at least one of following: a tooling speed of the grinding tool, a feeding speed of the grinding tool and/or a force of the grinding (tool). The tooling speed may refer, for example, a rotation speed of the grinding tool and it may be presented rounds per minute (RPM). The feeding speed may refer, for example, how fast the grinding tool is moved in relation to the part during the grinding or the other way around, it may presented meters per second (m/s), for example. The force of the grinding means how heavily the grinding tool is pressed against the part to be ground. It may also be called as a pressure of grinding tool. All of these parameters are very essential when compensating the tool wear. As described, the second process parameter set can be determined when the first process parameter set is known.

Let us now to describe with an example, how the first and second process parameters set may be determined. At first, the operator feeds the first parameter set into the robotic grind process via user interface. For example, following selections may be done: the type of the grinding process is deburring, strength of the grinding process is medium, the material of the part to be ground is steel and the grinding tool is an abrasive belt. Based on these parameters (first parameter set), the processing circuitry may be capable of determine the second parameter set that comprises, for example, the tooling speed, feeding speed and force of the grinding. When the second process parameter set is determined, the processing circuitry may further generate the compensation factors for each of the second parameters based on, at least partly, the tool wear data.

In an embodiment, the compensation factor comprises a multiplier used for increasing or decreasing a value of the parameter of second parameter set. Increasing of the value of the parameter may be achieved with the multiplier greater than 1. For example, the compensation factor 1,2 increases the parameter by 20%. Respectively decreasing of the value of the parameter may be achieved with the multiplier smaller than 1. For example, the compensation factor 0,8 decreases the parameter by 20%. The multiplier may also be 1 that may mean that the parameter is not chanced. Some of the parameters may be increased and some other decreased when compensating the tool wear. For example, the rotation speed of the grinding tool (tooling speed) may be increased and/or the feeding speed decreased to get better results when the tool is wearing. Still it is important to realise that just some of the parameters are compensated by the multiplier that is greater or smaller than 1 and some other are not compensated. For non-compensated parameters, the multiplier may be 1 or the compensation factor is not generated for those at all.

Still referring to Figure 3B, wherein the compensation factors are multipliers and are adjusted during the process according to an embodiment. At the point X2 of the operating time, the first compensation factor F1 may be 0,8 for the first parameter and the second and third compensation factors F2, F3 may be 1,2 for the second and third parameters. These factors may not be enough anymore at a point X3 when the tool is more worn. Hence, the processing circuitry is configured to adjust the previous compensation factors at the point X3 of the operating time of the tool. Then the first compensation factor F1 is adjusted to 0,7 and the second and third compensation factors F2, F3 are adjusted to 1,3, for example. At the point X4 the tool is worn out such that the wearing may not be compensated anymore with the compensation factors. Operating time of the grinding tool is monitored in the grinding process so the condition of the tool can be easily estimated with the tool wear data and/or the tool wear curve. It is also important to realise that more than two adjustments of the compensation factors may be performed during the grinding process, nevertheless two were presented in the example above. There may be a plurality of the adjustments of the compensation factors during the grinding process.

Effect of the generated compensation factor may also be taken into account in the tool wear data when adjusting the compensation factor during the process. For example, the force of the grinding (how heavily the tool is pressed against the part) may be added by one generated compensation factor and this may affect the tool wear. In other words, by adding the force, the tool may wear faster. Hence, this compensation factor and its effect the wearing of the tool is taken into account when generating the new compensation factor or adjusting the current one.

In an embodiment, the data from the actual grinding processes may also be used to update the tool wear data and/or the tool wear curve. The data may be collected from actual grinding processes and stored in the database. This enables the self-learning process wherein the compensations factors come more accurate over the time.

In an embodiment, the compensation and/or adjusting of the compensation is performed in a predetermined time interval. The time interval may be minutes or seconds, for example. In an embodiment, the time interval may also change during the process, so it is not necessarily the same all the time during the grinding process. For example, the time interval for adjusting the compensation may come shorter over the time when the tool wears. When the tool is brand new, the compensation may not be needed at all and is made later during the process when the tool wears such that it affects quality.

In an embodiment, the processing circuitry is configured to detect when the grinding tool is worn out. The processing circuitry may be capable of detect when the tool is coming to the end of its life cycle and/or is worn out. In other words, the tool wear may not be possible to compensate anymore by the compensation factor to achieve the desired quality level. The detection may be done based on the tool wear data, for example.

In an embodiment, the processing circuitry is configured to generate an alarm when the grinding tool is worn out. The processing circuitry may be capable of generate the alarm when the tool is coming to the end of its life cycle and/or is worn out. This is an indication that the tool wear may not be compensated anymore and the tool shall be changed.

In an embodiment, the tooling unit is configured to replace the worn out grinding tool with a new grinding tool. When the processing circuitry detects that the grinding tool is worn out, it may generate a signal for the tooling unit to replace the worn out tool with the new one. As described, when the tool is brand new, the compensation factors may not be needed, but when the tool wears during the grinding process, the compensation factors are determined for the parameters of the second parameter set and adjusted over the time.

In an embodiment, at least part of the first parameter set, the second parameter set and/or the at least one compensation parameter is saved in a database. All data (selections, parameters, etc.) provided in the grinding process may be saved in the database. The saved data may be used, for example, for updating the tool wear data. In addition, predetermined selections of the first parameter set may be saved in the database.

In an embodiment, the database comprises a local memory in the robotic grinding process. The database may be an internal memory or external memory (data storage) configured to be physically coupled with the robotic grinding process. The external memory may be a memory card and/ or a memory stick, for example.

In an embodiment, the database comprises a network based database like, for example, a cloud based database. Then a plurality of the robotic grinding process systems may be coupled to the same database enabling collection of the data from all systems. The robotic grinding systems may be in different locations like, for example, in different manufacturing sites.

In an embodiment, the robotic grinding process comprises a plurality of the different kind of databases.

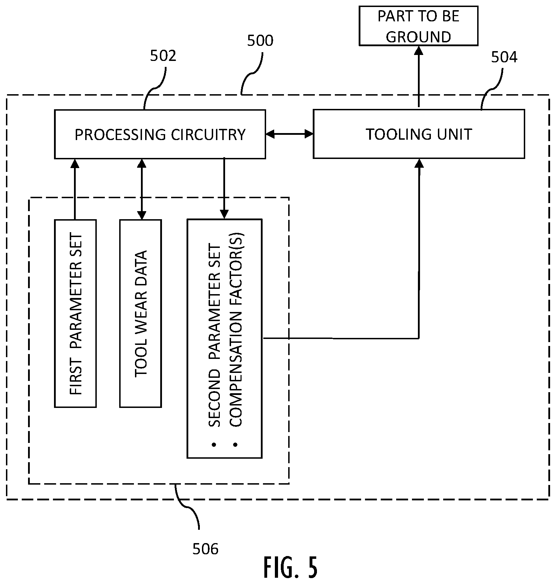

Figure 5 illustrates a system 500 for compensating the tool wear in the robotic grinding process. The system 500 comprises the processing circuitry 502, configured to perform at least any of the steps of blocks 100 - 104 and the tooling unit 504, configured to perform at least the step of block 106.

As described, the system 500 may further comprise the user interface for receiving the at least first parameter set and/or any other data needed in the grinding process. In an embodiment, the user interface may be in a controlling unit of the robotic grinding system wherein the operator may input the data into the system. The user interface may also be used for changing the information between the operator and the grinding process. For example, possible alarm signal of worn out tool may be presented in the user interface.

In an embodiment, the system 500 further comprises the database 506. The database may be a local in the system or a network based coupled with the system. The database may be used, for example, for storing the first and the second process parameter sets, the compensation factor(s) and/or the tool wear data.

Let us now to describe with an example how the solution according to the invention may be applied in practice. The processing circuitry obtains a set of process parameters (the first parameter set). The operator of the robotic grinding process may feed the process parameters into the system via user interface. The parameters may comprise the type of the grinding process and/or grinding tool, the strength of grinding and/or the material information of the part to be ground, for example. These parameters are used to determine more process parameters for the grinding process. The processing circuitry is configured to determine, based on the above mentioned parameters, more process parameters (the second parameter set). The process parameters determined by the processing circuitry may comprise the tooling speed, feeding speed and force of the grinding, for example. Hence, the processing circuitry obtains some of the process parameters (at least one) and these parameters are used to determine rest of the parameters needed in the grinding process.

The processing circuitry is further configured to generate the compensation factors for the second parameter set based, at least partly, on the tool wear data. The compensation factors are configured to compensate the tool wear in the grinding process. The tool wear data may be received from the actual testing how the different grinding tools wear in the different grinding processes when grinding different kind of materials. With the tool wear data, the tool wear can be estimated and automatically compensated during the grind process. The tooling unit is configured to apply the compensation factors in the grinding process and automatically compensate the tool wear during the process. The compensation or adjusting of the compensation may be performed in predetermined time intervals during the grinding process.

The invention provides the sophisticated automatic solution for compensating the tool wear in the grinding process without any extra steps in the process to inspect the condition of the tool during the process. Hence, the invention enables very effective and simple solution for the tool wear compensation based on the actual tool wear data.

The term "database" may refer to a device that is capable of storing data run-time (= working memory) or permanently (= non-volatile memory). The working memory and the non-volatile memory may be implemented by a random-access memory (RAM), dynamic RAM (DRAM), static RAM (SRAM), a flash memory, a solid state disk (SSD), PROM (programmable read-only memory), a suitable semiconductor, or any other means of implementing an electrical computer memory.

As used in this application, the term 'circuitry' refers to all of the following: (a) hardware-only circuit implementations such as implementations in only analog and/or digital circuitry; (b) combinations of circuits and software and/or firmware, such as (as applicable): (i) a combination of processor(s) or processor cores; or (ii) portions of processor(s)/software including digital signal processor(s), software, and at least one memory that work together to cause an apparatus to perform specific functions; and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term "circuitry" would also cover an implementation of merely a processor (or multiple processors) or portion of a processor, e.g. one core of a multi-core processor, and its (or their) accompanying software and/or firmware. The term "circuitry" would also cover, for example and if applicable to the particular element, an application-specific integrated circuit (ASIC), and/or a field-programmable grid array (FPGA) circuit for the apparatus according to an embodiment of the invention.

In an embodiment, the method is executed by a computer readable medium comprising program instructions that, when read by the computer, cause execution of the method according to anyone of claims 1 - 12. The computer may refer to the processing circuitry. The computer program may be distributed using a distribution medium which may be any medium readable by the processing circuitry. The medium may be a program storage medium, a memory, a software distribution package, or a compressed software package. In some cases, the distribution may be performed using at least one of the following: a near field communication signal, a short distance signal, and a telecommunications signal.

It will be obvious to a person skilled in the art that, as technology advances, the inventive concept can be implemented in various ways. The invention and its embodiments are not limited to the example embodiments described above but may vary within the scope of the claims.

## Claims

1. A method for compensating a tool wear in a robotic grinding process, the method comprising:
obtaining, by a processing circuitry, a first process parameter set of the grinding process;
determining, by the processing circuitry, a second process parameter set of the grinding process based at least partly on the first process parameter set;
generating, by the processing circuitry, at least one compensation factor for at least one parameter of the second process parameter set based, at least partly, on tool wear data; and
compensating, by a tooling unit, wearing of a grinding tool based on the compensation factor.

2. The method of claim 1, wherein the processing circuitry is further configured to adjust the at least one compensation factor during the grinding process based, at least partly, on the tool wear data.

3. The method of claim 2, wherein the tooling unit is configured to compensate the wearing of the grinding tool based on the adjusted compensate factor.

4. The method of any preceding claim, wherein processing circuitry is configured to generate the compensation factor for each parameter of the second parameter set.

5. The method of any preceding claim, wherein the first process parameter set comprises at least one of a type of the grinding process, strength of the grinding, a material of a part to be ground and/or a type of the grinding tool.

6. The method of any preceding claim, wherein the second process parameter set comprises at least one of tooling speed of the grinding tool, feeding speed of the grinding tool and/or force of the grinding tool.

7. The method of any preceding claim, wherein the compensation factor comprises a multiplier used for increasing or decreasing a value of the parameter of second parameter set.

8. The method of any preceding claim, wherein the compensation is performed in a predetermined time interval.

9. The method of any preceding claim, wherein the processing circuitry is configured to detect when the grinding tool is worn out.

10. The method of claim 9, wherein the tooling unit is configured to replace the worn out grinding tool with a new grinding tool.

11. The method of any preceding claim, wherein the first parameter set, the second parameter set, the at least one compensation factor and/or the tool wear data is saved in a database.

12. The method of claim 11, wherein the database comprises a cloud based database.

13. A system for compensating a tool wear in a robotic grinding process, the system comprising:
a processing circuitry; and
a tooling unit;
wherein the system is configured to perform all the steps of anyone of claims 1 - 12.

14. The system of claim 13, wherein the system further comprises a database.

15. A computer readable medium comprising program instructions that, when read by the computer, cause execution of the method according to anyone of claims 1 - 12.
